# EUROPÄISCHE PATENTSCHRIFT

(11) **EP 1 732 743 B1**
(45) Veröffentlichungstag und Bekanntmachung des Hinweises auf die Patenterteilung: **06.08.2014**
(21) Anmeldenummer: 05733567.1
(22) Anmeldetag: 05.04.2005
(51) Int. Cl.: B29C 49/78

(54) **VERFAHREN UND VORRICHTUNG ZUR BLASFORMUNG VON BEHÄLTERN UNTER VERWENDUNG EINER REDUZIERTEN DRUCKANSTIEGSGESCHWINDIGKEIT**
METHOD AND DEVICE FOR BLOW-FORMING CONTAINERS USING A REDUCED PRESSURE INCREASING SPEED
PROCEDE ET DISPOSITIF DE MOULAGE DE CONTENANTS PAR SOUFFLAGE, FAISANT APPEL A UNE VITESSE D'AUGMENTATION DE PRESSION REDUITE

(30) Priorität: 08.04.2004 DE 102004018146; 16.10.2004 DE 102004050531
(43) Veröffentlichungstag der Anmeldung: 20.12.2006
(73) Patentinhaber: KHS Corpoplast GmbH, 22145 Hamburg (DE)
(72) Erfinder: HASENDONCKX, Frank, D-22395 Bergstedt (DE); JAKSZTAT, Wolf, 22547 Hamburg (DE)
(74) Vertreter: Meissner, Bolte & Partner GbR
(86) Internationale Anmeldenummer: PCT/DE2005/000600
(87) Internationale Veröffentlichungsnummer: WO 2005/097466

(56) Entgegenhaltungen:
- EP-A- 0 655 313
- EP-A- 1 314 535
- US-A- 4 042 657
- US-B1- 6 576 171

## Beschreibung

Die Erfindung betrifft ein Verfahren zur Blasformung von Behältern, bei dem ein Vorformling nach einer thermischen Konditionierung innerhalb einer Blasform von einer Reckstange gereckt und durch Blasdruckeinwirkung in den Behälter umgeformt wird.

Die Erfindung betrifft darüber hinaus eine Vorrichtung zur Blasformung von Behältern, die mindestens eine Blasstation mit einer Blasform sowie mindestens einer Reckstange aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechriischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei der Blasformung der Behälter wird typischerweise zunächst ein Vordruck von etwa 5 bar in den Behälter eingeleitet, nach Ablauf einer mit diesem Vordruck durchgeführten Vorblasphase wird Hochdruck mit einem Druck von etwa 30 bar bis 40 bar dem Behälter zugeführt. Die Zuführung des Vordruckes und des Hochdruckes erfolgt durch geschaltete Ventile, die zu einem steilen Druckanstieg und somit zu einer kurzfristigen Füllung des Behälters mit dem benötigten Druckgasvolumen führen. Insbesondere ist auch bereits versucht worden, sehr schnell schaltende Ventile einzusetzen, um Verzögerungen beim Druckaufbau im Behälter zu minimieren.

Zusätzlich zu einer möglichst schnellen Blasformung des Behälters besteht ein weiteres Ziel darin, die blasgeformten Behälter mit möglichst geringen Spannungen im orientierten Wandungsmaterial zu versehen, um die Neigung zu späteren Rißbildungen zu verringern. Generell stellt die jeweils realisierte Gesamtheit der Blasparameter einen Kompromiß zwischen einer schnellen Behälterformung und einer Formung qualitativ möglichst hochwertiger Behälter dar.

Aus der EP-A-1 314 535 ist es bereits bekannt, einen Blaszyklus derart zu gestalten, daß zunächst ein erster und anschließend ein zweiter Blasdruck zugeführt wird und daß der höhere Blasdruck ausreichend lange gehalten wird, um eine Materialverfestigung durchzuführen. Nach Erreichen der Materialverfestigung wird der Blasdruck gegen eine Umgebung abgelassen. In einem Bereich zwischen 10 und 20 bar beträgt die Druckanstiegsgeschwindigkeit gemäß einer schriftlichen Angabe etwa 160 bar/Sekunde, zeichnerisch dargestellt ist eine Druckanstiegsgeschwindigkeit von etwa 370 bar/Sekunde.

In der US-A-4,042,657 wird ebenfalls für einen Teil eines Blaszyklus der Blasdruckverlauf beschrieben. In einem Druckbereich unterhalb von 13,3 bar beträgt eine Druckanstiegsgeschwindigkeit für einen bestimmten Zeitraum etwa 42 bar/Sekunde.

Aufgabe der vorliegenden Erfindung ist es, ein Verfahren der einleitend genannten Art derart zu verbessern, daß sowohl geringe Blaszeiten als auch eine hohe Behälterqualität erreicht werden.

Diese Aufgabe wird erfindungsgemäß dadurch gelöst, daß der Blasdruck im Behälter innerhalb eines Druckintervalles von 10 bar bis 20 bar höchstens mit einer Druckanstiegsgeschwindigkeit von 100 bar/sek erhöht wird.

Weitere Aufgabe der vorliegenden Erfindung ist es, eine Vorrichtung der einleitend genannten Art derart zu konstruieren, daß die Produktion qualitativ hochwertiger Behälter bei gleichzeitig geringer Prozeßzeit unterstützt wird.

Diese Aufgabe wird erfindungsgemäß dadurch gelöst, daß eine Steuereinrichtung für die Blasdruckzuführung mit einer Steuercharakteristik derart versehen ist, daß ein Druckanstieg innerhalb des Behälters in einem Druckbereich von 10 bar bis 20 bar eine maximale Steigung von etwa 100 bar/sek aufweist.

Durch die gegenüber einem sprunghaften Druckanstieg erfolgte Begrenzung des Druckanstieges kann in überraschender Weise trotz der während des Druckaufbaues verlängerten Zeitspanne für die Füllung des Behälters mit dem Druckgas insgesamt eine Prozeßzeitverkürzung bei gleichzeitig verbesserter Flaschenqualität erreicht werden. Der verzögerte Druckaufbau zu Beginn des Blasvorganges führt zu einer deutlichen verringerung, von Spannungsbildungen im Wandungsmaterial und ermöglicht hierdurch eine Vorgabe der weiteren Blasund Temperierungsparameter derart, daß schneller eine für die Entformung des Behälters erforderliche Formstabilität erreicht wird.

Grundsätzlich ist es bei einer Begrenzung der maximalen Steigung des Druckanstieges auf einen geeigneten Wert auch möglich, die gemäß dem Stand der Technik vorgesehene Aufteilung des Blasvorganges in eine Vorblasphase mit einem niedrigen Druck und einer Hauptblasphase mit einem höheren Druck miteinander zu kombinieren und beginnend mit dem Anfang der Blasphase eine kontinuierlich steigende Druckentwicklung mit geeigneter Begrenzung der Druckanstiegsgeschwindigkeit im Innenraum des Behälters zu erreichen. Der Begriff des Behälters wird hierbei synonym für den zu Beginn des Blasvorganges vorhandenen Vorformling, die sich nach einer Druckbeaufschlagung entwickelnde Behälterblase sowie den während des Ablaufes der Behälter formung zunehmend weiter ausgeformten endgültigen Behälter verwendet.

Das erfindungsgemäße Verfahren sowie die Vorrichtung erweisen sich als besonders vorteilhaft, wenn flaschenförmige Behälter mit einem Behälterboden mit Standfüßen, einem sogenannten Petaloid-Boden, gefertigt werden. Hier kann im Bodenbereich eine besonders hohe Widerstandsfähigkeit gegen Streßcrack erreicht werden.

Eine weitere Verringerung von Spannungen im Wandungsmaterial des Behälters kann dadurch erreicht werden, daß der Druck höchstens mit einer Druckanstiegsgeschwindigkeit von 100 bar/sek erhöht wird.

Insbesondere erweist es sich als vorteilhaft, daß die Begrenzung der Druckanstiegsgeschwindigkeit bis zu einem Druck von etwa 30 bar durchgeführt wird.

Darüber hinaus ist es zweckmäßig, daß die Begrenzung der Druckanstiegsgeschwindigkeit ab einem Druck von etwa 5 bar durchgeführt wird.

Besonders gute Materialeigenschaften werden dadurch unterstützt, daß die Begrenzung der Druckanstiegsgeschwindigkeit innerhalb eines Druckintervalls von 5 bis 40 bar durchgeführt wird. Die vorstehenden Definitionen der Druckbereiche sind gemäß einer bevorzugten Ausführungsform jeweils derart zu verstehen, daß innerhalb des gesamten jeweils definierten Druckintervalls eine mittlere Druckanstiegsgeschwindigkeit die spezifizierten Werte nicht übersteigt. Kurzfristige Druckspitzen erweisen sich als unkritisch, da diese durch die vorliegenden Materialträgheiten nicht zu nennenswerten Effekten führen.

Eine weitere Optimierung des Blasvorganges erfolgt dadurch, daß eine Begrenzung der Druckanstiegsgeschwindigkeit innerhalb eines Zeitintervalles ab Beginn des Blasvorganges bis zum Ablauf von 1 Sekunde durchgeführt wird.

Insbesondere ist daran gedacht, daß eine Begrenzung der Druckanstiegsgeschwindigkeit innerhalb eines Zeitintervalles ab Beginn des Blasvorganges bis zum Ablauf von 0,7 Sekunden durchgeführt wird. Die vorstehenden Zeitdefinitionen sind gemäß einer bevorzugten Ausführungsform derart zu verstehen, daß innerhalb des gesamten Zeitraumes ab Beginn des Blasvorganges bis zum definierten Zeitwert die Druckanstiegsgeschwindigkeit wie definiert begrenzt ist. Auch hierbei sind wiederum kurzfristige Druckanstiegsspitzen aufgrund der Materialträgheiten unkritisch.

Ein typisches prozeßtechnisches zeitintervall für die Begrenzung der Druckanstiegsgeschwindigkeit wird dadurch definiert, daß die Druckanstiegsgeschwindigkeit innerhalb eines Zeitintervalles nach Beginn des Blasvorganges von 0,2 bis 1,5 Sekunden begrenzt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine Gegenüberstellung eines im oberen Bereich dargestellten Druckverlaufes gemäß dem Stand der Technik und einem im unteren Bereich dargestellten Druckverlauf mit begrenzter Druckanstiegsgeschwindigkeit.

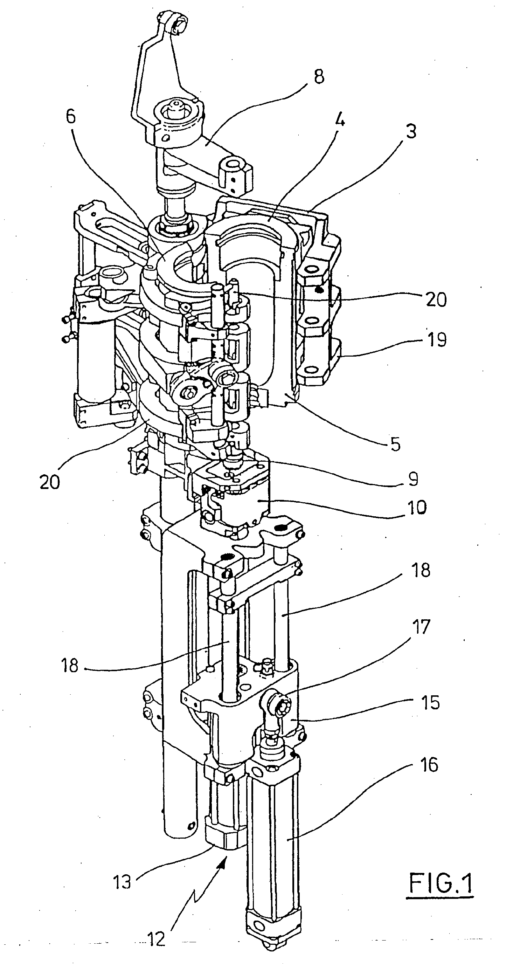

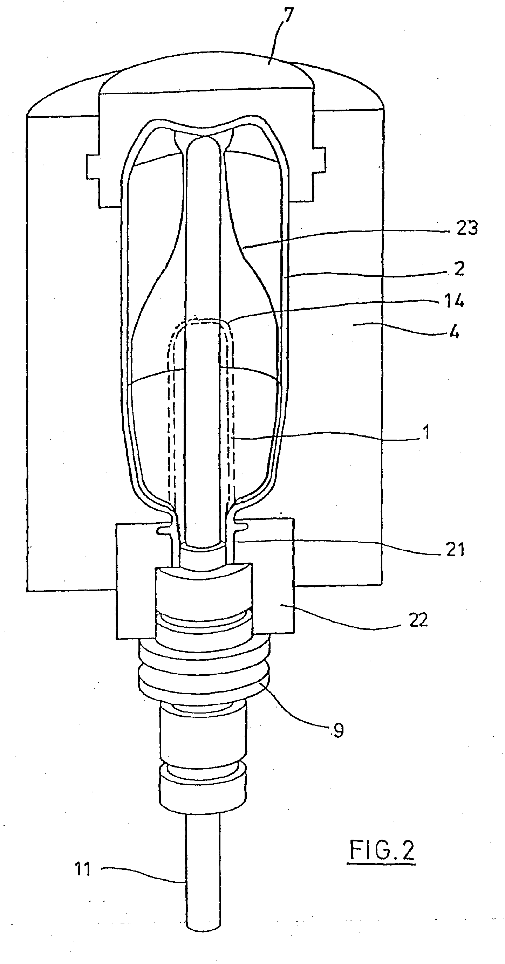

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

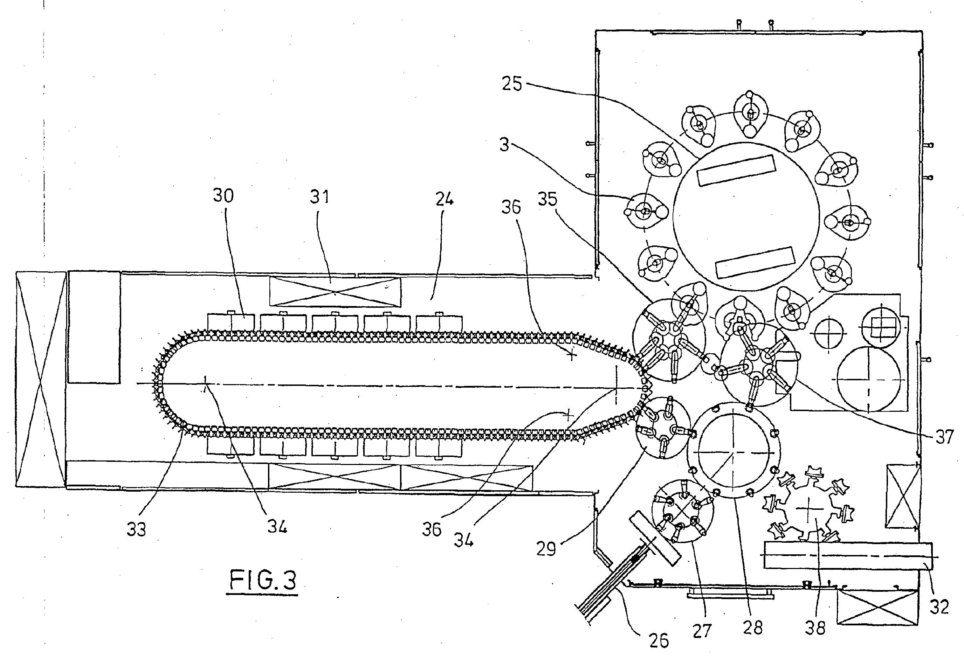

Fig. 2 zeigt zusätzlich zum geblasenen Behälter (2) auch gestrichelt eingezeichnet den Vorformling (1) und schematisch eine sich entwickelnde Behälterblase (23). Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

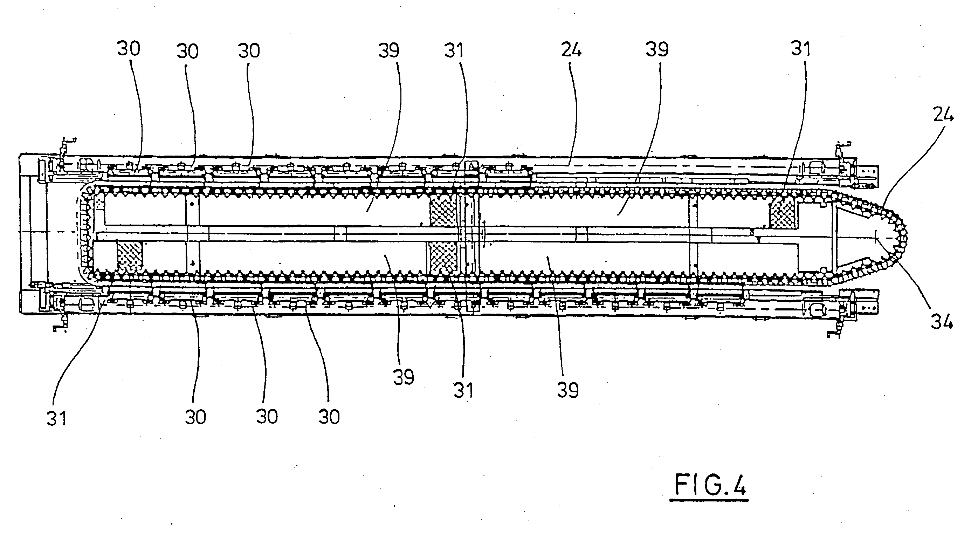

In der in Fig. 4 dargestellten modifizierten Heizstrecke (24) können durch die größere Anzahl von Heizstrahlern (30) eine größere Menge von Vorformlingen (1) je zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

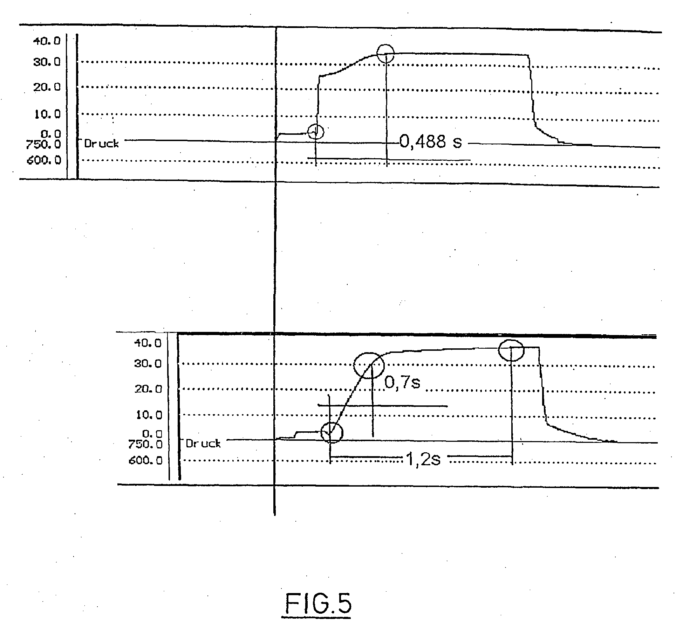

Fig. 5 zeigt eine Gegenüberstellung eines im oberen Zeichnungsteil dargestellten konventionellen Blasdruckverlaufes sowie eines im unteren Zeichnungsteil dargestellten Blasdruckverlaufes mit Begrenzung einer maximalen Druckanstiegsgeschwindigkeit. Gemäß dem Stand der Technik erfolgt ein nahezu sprunghafter Anstieg des Blasdruckes von einem Wert von etwa 5 bar auf einen Wert von etwa 25 bar mit anschließendem langsamen Anstieg auf einen Enddruck im Bereich von 30 bar bis 40 bar.

Gemäß dem im unteren Zeichnungsteil dargestellten Blasdruckverlauf mit Begrenzung der maximalen Druckanstiegsgeschwindigkeit erfolgt zwischen dem Druckniveau von 5 bar bis etwa 30 bar kein sprunghafter Druckanstieg, sondern eine maximale Druckanstiegsgeschwindigkeit beträgt etwa 100 bar/sek. Die Begrenzung der Druckanstiegsgeschwindigkeit kann anwendungsabhängig erfolgen, generell erweist es sich als vorteilhaft, einen Wert unterhalb von 200 bar/sek zu wählen.

Typischerweise erfolgt die Begrenzung der Druckanstiegsgeschwindigkeit in einem Zeitraum von etwa 0,2 bis 1,5 Sekunden nach Beginn des Blasvorganges und in einem Druckintervall von 5 bis 40 bar.

Alternativ zur dargestellten Zuführung eines ersten Blasdruckes mit einem relativ geringen Druck und eines zweiten höheren Blasdruckes ist es auch denkbar, lediglich einen einheitlichen Blasdruck zuzuführen und den sich ergebenden Druckaufbau innerhalb des Behälters durch die Dimensionierung der Strömungswege zu beeinflussen.

## Patentansprüche

1. Verfahren zur Blasformung von Behältern (2), bei dem ein Vorformling (1) nach einer thermischen Konditionierung innerhalb einer Blasform (4) von einer Reckstange (11) gereckt und durch Blasdruckeinwirkung in den Behälter (2) umgeformt wird, **dadurch gekennzeichnet, daß** der Blasdruck im Behälter (2) innerhalb eines Druckintervalles von 10 bar bis 20 bar höchstens mit einer Druckanstiegsgeschwindigkeit von etwa 100 bar/sek erhöht wird.

2. Verfahren nach Anspruch 1, **dadurch gekennzeichnet, daß** die Begrenzung der Druckanstiegsgeschwindigkeit bis zu einem Druck von etwa 30 bar durchgeführt wird.

3. Verfahren nach Anspruch 1 oder 2, **dadurch gekennzeichnet, daß** die Begrenzung der Druckanstiegsgeschwindigkeit ab einem Druck von etwa 5 bar durchgeführt wird.

4. Verfahren nach einem der Ansprüche 1 bis 3, **dadurch gekennzeichnet, daß** die Begrenzung der Druckanstiegsgeschwindigkeit innerhalb eines Druckintervalls von 5 bis 40 bar durchgeführt wird.

5. Verfahren nach einem der Ansprüche 1 bis 4, **dadurch gekennzeichnet, daß** eine Begrenzung der Druckanstiegsgeschwindigkeit innerhalb eines Zeitintervalles ab Beginn des Blasvorganges bis zum Ablauf von 1 Sekunde durchgeführt wird.

6. Verfahren nach einem der Ansprüche 1 bis 4, **dadurch gekennzeichnet, daß** eine Begrenzung der Druckanstiegsgeschwindigkeit innerhalb eines Zeitintervalles ab Beginn des Blasvorganges bis zum Ablauf von 0,7 Sekunden durchgeführt wird.

7. Verfahren nach einem der Ansprüche 1 bis 6, **dadurch gekennzeichnet, daß** die Druckanstiegsgeschwindigkeit innerhalb eines Zeitintervalles nach Beginn des Blasvorganges von 0,2 bis 1,5 Sekunden begrenzt wird.

8. Vorrichtung zur Blasformung von Behältern (2), die mindestens eine Blasstation (3) mit mindestens einer Blasform (4) sowie mindestens einer Reckstange (11) aufweist, **dadurch gekennzeichnet, daß** eine Steuereinrichtung für die Blasdruckzuführung mit einer Steuercharakteristik derart versehen ist, daß ein Druckanstieg innerhalb des Behälters (2) in einem Druckbereich von 10 bar bis 20 bar eine maximale Steigung von etwa 100 bar/sek aufweist.

9. Vorrichtung nach Anspruch 8, **dadurch gekennzeichnet, daß** die Steuercharakteristik eine Begrenzung der Druckanstiegsgeschwindigkeit bis zu einem Druck von 30 bar aufweist.

10. Vorrichtung nach Anspruch 8, **dadurch gekennzeichnet, daß** die Steuercharakteristik eine Begrenzung der Druckanstiegsgeschwindigkeit ab einem Druck ab 5 bar aufweist.

11. Vorrichtung nach einem der Ansprüche 8 bis 10, **dadurch gekennzeichnet, daß** die Steuercharakteristik eine Druckbegrenzung in einem Zeitbereich bis zu 1 Sekunde nach Beginn des Blasvorganges aufweist.

12. Vorrichtung nach einem der Ansprüche 8 bis 10, **dadurch gekennzeichnet, daß** die Steuercharakteristik eine Druckbegrenzung in einem Zeitbereich bis zu 0,7 Sekunde nach Beginn des Blasvorganges aufweist.

## Claims

1. A method for blow moulding containers (2), in the case of which a preform (1) is stretched within a blow mould (4) after a thermal conditioning by means of a stretching rod (11) and is shaped into the container (2) by applying blowing pressure, **characterised in that** the blowing pressure in the container (2) within a pressure interval of 10 bar to 20 bar is maximally increased with a rate of pressure rise of approximately 100 bar/second.

2. The method according to claim 1, **characterised in that** the limitation of the rate of pressure rise is carried out up to a pressure of approximately 30 bar.

3. The method according to claim 1 or 2, **characterised in that** the limitation of the rate of pressure rise is carried out starting a pressure of approximately 5 bar.

4. The method according to any one of claims 1 to 3, **characterised in that** the limitation of the rate of pressure rise is carried out within a pressure interval of between 5 and 40 bar.

5. The method according to any one of claims 1 to 4, **characterised in that** a limitation of the rate of pressure rise is carried out within a time interval, starting at the onset of the blowing process, until 1 second has passed.

6. The method according to any one of claims 1 to 4, **characterised in that** a limitation of the rate of pressure rise is carried out within a time interval, starting at the onset of the blowing process, until 0.7 seconds have passed.

7. The method according to any one of claims 1 to 6, **characterised in that** the rate of pressure rise is limited within a time interval after onset of the blowing process of between 0.2 and 1.5 seconds.

8. A device for blow moulding containers (2), which encompasses at least one blowing station (3) comprising at least one blow mould (4) as well as at least one stretching rod (11), **characterised in that** provision is made for a control device for supplying blowing pressure with a control characteristic such that a pressure rise within the container (2) encompasses a maximum increase of approximately 100 bar/second in a pressure range of between 10 bar and 20 bar.

9. The device according to claim 8, **characterised in that** the control characteristic encompasses a limitation of the rate of pressure rise of up to a pressure of 30 bar.

10. The device according to claim 8, **characterised in that** the control characteristic encompasses a limitation of the rate of pressure rise starting at a pressure of 5 bar.

11. The device according to any one of claims 8 to 10, **characterised in that** the control characteristic encompasses a pressure limitation in a time period of up to 1 second after onset of the blowing process.

12. The device according to any one of claims 8 to 10, **characterised in that** the control characteristic encompasses a pressure limitation in a time period of up to 0.7 seconds after onset of the blowing process

## Revendications

1. Procédé de moulage par soufflage de récipients (2), dans le cadre duquel une préforme (1), après un conditionnement thermique, est étirée par une barre d'étirage (11) à l'intérieur d'un moule de soufflage (4) et, sous l'action d'une pression de soufflage, transformée en un récipient (2), **caractérisé en ce que** la pression de soufflage dans le récipient (2) est augmentée, dans un intervalle de pression de 10 bars à 20 bars, avec une vitesse maximale d'augmentation de la pression d'environ 100 bars/s.

2. Procédé selon la revendication 1, **caractérisé en ce que** la limitation de la vitesse d'augmentation de la pression est appliquée jusqu'à une pression d'environ 30 bars.

3. Procédé selon la revendication 1 ou 2, **caractérisé en ce que** la limitation de la vitesse d'augmentation de la pression est appliquée à partir d'une pression d'environ 5 bars.

4. Procédé selon l'une des revendications 1 à 3, **caractérisé en ce que** la limitation de la vitesse d'augmentation de la pression est appliquée dans un intervalle de pression de 5 à 40 bars.

5. Procédé selon l'une des revendications 1 à 4, **caractérisé en ce qu'**une limitation de la vitesse d'augmentation de la pression est appliquée dans un intervalle de temps à partir du début du processus de soufflage jusqu'à l'écoulement de 1 seconde.

6. Procédé selon l'une des revendications 1 à 4, **caractérisé en ce qu'**une limitation de la vitesse d'augmentation de la pression est appliquée dans un intervalle de temps à partir du début du processus de soufflage jusqu'à l'écoulement de 0,7 seconde.

7. Procédé selon l'une des revendications 1 à 6, **caractérisé en ce que** la vitesse d'augmentation de la pression est limitée dans un intervalle de temps de 0,2 à 1,5 seconde après le début du processus de soufflage.

8. Dispositif de moulage par soufflage de récipients (2) présentant au moins une station de soufflage (3) avec au moins un moule de soufflage (4) ainsi qu'au moins une barre d'étirage (11), **caractérisé en ce que** un dispositif de commande de la pression de soufflage est doté d'une caractéristique de commande telle qu'une augmentation de pression à l'intérieur du récipient (2) dans une plage de pression de 10 bars à 20 bars présente une croissance maximale d'environ 100 bars/s.

9. Dispositif selon la revendication 8, **caractérisé en ce que** la caractéristique de commande présente une limitation de la vitesse d'augmentation de la pression jusqu'à une pression de 30 bars.

10. Dispositif selon la revendication 8, **caractérisé en ce que** la caractéristique de commande présente une limitation de la vitesse d'augmentation de la pression à partir d'une pression de 5 bars.

11. Dispositif selon l'une des revendications 8 à 10, **caractérisé en ce que** la caractéristique de commande présente une limitation de la vitesse d'augmentation de la pression dans un intervalle de temps de jusqu'à 1 seconde après le début du processus de soufflage.

12. Dispositif selon l'une des revendications 8 à 10, **caractérisé en ce que** la caractéristique de commande présente une limitation de la vitesse d'augmentation de la pression dans un intervalle de temps de jusqu'à 0,7 seconde après le début du processus de soufflage.
